(19) **Europäisches Patentamt
European Patent Office
Office européen des brevets**

(11) **EP 4 606 932 B1**

(12) **EUROPEAN PATENT SPECIFICATION**

(45) Date of publication and mention
of the grant of the patent:
**27.05.2026 Bulletin 2026/22**

(21) Application number: **24159533.9**

(22) Date of filing: **24.02.2024**

(51) International Patent Classification (IPC):
*C25B 1/04* (2021.01)   *C25B 9/05* (2021.01)
*C25B 9/70* (2021.01)   *C25B 15/02* (2021.01)
*C25B 15/08* (2006.01)

(52) Cooperative Patent Classification (CPC):
**C25B 1/04; C25B 9/05; C25B 9/70; C25B 15/02;
C25B 15/087;** Y02E 60/36

(54) **AN ELECTROLYSER SYSTEM AND A METHOD FOR OPERATING THE ELECTROLYSER SYSTEM**

ELEKTROLYSEURSYSTEM UND EIN VERFAHREN ZUM BETREIBEN DES ELEKTROLYSEURSYSTEMS

SYSTÈME D'ÉLECTROLYSEUR ET PROCÉDÉ DE FONCTIONNEMENT DU SYSTÈME D'ÉLECTROLYSEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**27.08.2025 Bulletin 2025/35**

(73) Proprietor: **OÜ Stargate Hydrogen Solutions
10621 Tallinn (EE)**

(72) Inventors:
• **APAYDIN, Ardan
11415 Tallinn (EE)**
• **GROLIG, Jan Gustav
11415 Tallinn (EE)**
• **KÜNGAS, Rainer
11415 Tallinn (EE)**

(74) Representative: **KASTEL Patentanwälte PartG
mbB
St.-Cajetan-Straße 41
81669 München (DE)**

(56) References cited:
**US-A1- 2021 262 101    US-A1- 2022 325 423
US-A1- 2022 333 260**

**Description**

TECHNICAL FIELD

The present invention relates to an electrolyser system, in particular the invention relates to a water electrolyser system using alkaline medium. The present invention particularly relates to an electrolyser system and a method for operating the electrolyser system.

BACKGROUND ART

In alkaline water electrolysis, water is electrochemically converted into hydrogen and oxygen in alkaline medium: $H_2O = H_2 + 0.5\ O_2$. An electrolysis cell comprises two electrodes (an anode and a cathode) and an electrolyte. The electrolyte comprises a liquid alkaline medium such as an aqueous solution of hydroxides and/or carbonates. The alkaline electrolyte flows through the anode and cathode compartment of the cell, which are connected fluidically in parallel, thereby immersing the electrodes in the electrolyte. The electrolyte that is flowing through the anode compartment of the cell is referred to as the anolyte and the electrolyte that is flowing through the cathode compartment of the cell is referred to as the catholyte. It is common practice to mix the anolyte and catholyte before entering the cell. Furthermore, during operation, an electric potential is applied between the two electrodes, resulting in the flow of electrolysis current through the electrolysis cell. During operation, hydrogen is generated on the cathode according to the hydrogen evolution reaction (HER): $2\ H_2O + 2e^- = H_2 + 2\ OH^-$, while oxygen is generated on the anode according to the oxygen evolution reaction (OER): $2\ OH^- = 0.5\ O_2 + H_2O + 2e^-$. The electrolysis cell further comprises a porous separator (diaphragm) and/or an ion exchange membrane capable of conducting hydroxide ions and separating the anode and cathode compartments to prevent mixing of the product gases. For the purposes of the present invention, the terms 'porous separator', 'diaphragm', and 'membrane' are used interchangeably. The electrodes are placed on either side of the diaphragm in a sandwich-like manner. The cells are typically assembled electrically in series in a cell stack between a first end plate and a second end plate. In the anode compartment, the produced oxygen is mixing with the flowing anolyte, and a gas-liquid mixture comprising oxygen and the electrolyte is flowing out of each cell in the cell stack. The oxygen-electrolyte streams flowing out of each cell are combined into a single combined stream (e.g., with the help of a stack manifold), which is fed to an oxygen-side gas-liquid separator. Similarly, in the cathode compartment, the produced hydrogen is mixing with the flowing catholyte, and a gas-liquid mixture comprising hydrogen and the electrolyte is flowing out of each cell in the cell stack. The hydrogen-electrolyte streams flowing out of each cell are combined into a single combined stream, which is fed to a hydrogen-side gas-liquid separator.

In gas-liquid separators the electrolyte is separated from the gases: in the oxygen-side gas-liquid separator, the anolyte is separated from the produced oxygen gas, and in the hydrogen-side gas-liquid separator, the catholyte is separated from the produced hydrogen gas. After the separation step, electrolyte from the separators is cooled and sent back to the electrolyser stack(s) to take part in further electrolysis (electrolyte recycle). In some configurations, the electrolyte enters the stack via separate anolyte and catholyte inlets, whereas in other configurations, the electrolyte enters the stack via a common electrolyte inlet. If the electrolyte streams are kept completely separate (i.e., no mixing of anolyte and catholyte), the concentration of the anolyte and catholyte would change over time: the anolyte concentration would decrease as a result of the water generated due to electrochemical reaction at the anode and the catholyte concentration would increase due to the consumption of water at the cathode. In a conventional electrolyser system, the electrolyte from both the separators is at least partially mixed to balance the electrolyte concentration and the mixed electrolyte is split into two streams and supplied to the catholyte and anolyte inlets of the stack. If the concentrations of the catholyte and the anolyte are not balanced, the concentrations would continue to diverge, which would result in an efficiency loss of the electrolyser performance. For KOH-containing electrolytes, the KOH concentration in the electrolyte should preferably be within a defined range of from 20 wt% to 40 wt%, preferably between 26 wt% to 36 wt%. According to Gilliam et al. (International Journal of Hydrogen Energy, Issue 32, pages 359-364, doi: 10.1016/j.ijhydene.2006.10.062, published 11 Dec 2006), the electric conductivity of an aqueous KOH solution at 70°C is 0.98 S/cm for 18 wt% solution, 1.04 S/cm for 20wt% solution, 1.19 S/cm for 26 wt% solution, 1.22 S/cm for 28 wt% solution, 1.23 S/cm for 30 wt% solution, 1.24 S/cm for 32 wt% solution, 1.23 S/cm for 34wt% solution, 1.22 S/cm for 36 wt% solution, 1.16 S/cm for 40 wt% solution, and 1.13 S/cm for 42 wt% solution. In other words, there is a parabolic dependency between KOH concentration and the corresponding electric conductivity, and the conductivity maximum is in the concentration range between 20 wt% and 40 wt%, preferably between 26 wt% and 36 wt% KOH, outside of which the conductivity starts to rapidly decrease. For the purposes of the electrolysis process, it is desirable to operate the electrolyser under conditions where the electric conductivity of the electrolyte is as high as possible to minimize ohmic losses in the electrolysis cell. Ohmic losses decrease the efficiency of the electrolysis cell. The upper preferred limit for KOH concentration is additionally affected by the increased corrosion rate of metal components in concentrated KOH solutions at elevated temperatures.

During electrolysis operation, the hydrogen generated at the cathode side also contains some oxygen as an

## EP 4 606 932 B1

impurity. Similarly, the oxygen generated at the anode side also contains some hydrogen as an impurity. The impurities are the result of a phenomenon commonly referred to as "gas crossover". Gas crossover occurs due to two primary mechanisms: due to gas crossover through the diaphragm or as a result of electrolyte mixing. Gas crossover through the diaphragm can proceed through diffusion, pressure-driven convection, and electro-osmotic drag. In case of electrolyte mixing, dissolved gases, e.g. gases which were not separated from the electrolyte solution by the respective gas-liquid-separators, get introduced to the electrolyte streams that are recycled back to the electrolysis cell and ultimately end up in product gas streams. In particular, hydrogen gets introduced to the oxygen stream and the extent of this phenomenon is characterized by HTO (hydrogen to oxygen), defined in Equation 1 as

$$HTO = \frac{n_a^{H2}}{n_a^{O2}+n_a^{H2}} \qquad \text{(Equation 1)}$$

where $n_a^{H2}$ is the volumetric flow rate of hydrogen in the anolyte outlet and $n_a^{O2}$ is the volumetric flow rate of oxygen in the anolyte outlet. Similarly, the oxygen gets introduced to the hydrogen stream and the extent of this phenomenon is characterized by OTH (oxygen to hydrogen), defined in Equation 2 as

$$OTH = \frac{n_c^{O2}}{n_c^{H2}+n_c^{O2}} \qquad \text{(Equation 2)}$$

where $n_c^{O2}$ is the volumetric flow rate of oxygen in the catholyte outlet and $n_c^{H2}$ is the volumetric flow rate of hydrogen in the catholyte outlet. Importantly, gas crossover increases potential risk of exceeding a lower explosion limit (LEL) for hydrogen/oxygen mixture in the anode compartment of the electrolyser, which limits the operating range of electrolyser. Under normal operation, the biggest impurity contribution to both HTO and OTH occurs through electrolyte mixing. On the other hand, electrolyte mixing is essential to balance the electrolyte concentrations in order to maintain efficient operation of the electrolyser.

Jörn Brauns et al. (Electrochimica Acta, volume 404, published on 1 February 2022, 139685, https://doi.org/10.1016/j.electacta.2021.139715) discloses alkaline water electrolysis system. The system comprises an electrolyte mixing arrangement which enables switching between mixed and split electrolyte cycles and adapting the liquid electrolyte volume flow rate depending on the current density. All experiments were carried out at a pressure of 7 bar, a temperature of 60 °C and with an aqueous potassium hydroxide solution with 32 wt.% KOH as the electrolyte. The reference operating mode included full mixing of anolyte and catholyte cycles. In addition, two dynamic operating approaches were analyzed: the first approach focused on periodic switching between mixed and separated electrolyte cycles while keeping electrolyte flow rate constant, the second approach was based on adapting the electrolyte volume flow rate depending on the current density, while keeping the anolyte and catholyte cycles fully mixed. The dynamic operating concepts were compared to reference experiments with fully mixed electrolyte cycles, and the experimental evaluation showed that the proposed operating approaches were able to reduce HTO compared to the reference without a noticeable increase of the cell potential. The concept of periodic switching while keeping the electrolyte flow rate constant resulted in significant fluctuations in the HTO values (on the order of 0.5 wt%) when the electrolyser was operated according to a wind electricity profile, and even larger fluctuations exceeding 1 wt% HTO were observed when the electrolyser was operated according to a photovoltaic electricity profile. Simply varying the electrolyte flow rate in response to current density resulted in less fluctuations, but on average, the HTO values obtained this way were higher than for the case where electrolyte cycles were only partially mixed. Brauns *et al.* mention that for both proposed cases, additional investment and operating costs would be associated with the implementation of additional components (valves, individual equipment for each electrolyte cycle) and sufficiently dimensioned electrolyte volume. Furthermore, it would be desirable to provide an operating mode for an electrolyser which enables reaching low HTO values as well as OTH values, and where the HTO values would have minimal fluctuations, while still ensuring sufficient electrolyte mixing.

EP 3770304 A1 (Tokuyama Corp, filed 12-03-2019) discloses an alkaline water electrolysis apparatus comprising an electrolysis vessel, a first gas-liquid separator, a second gas-liquid separator, a first electrolyte tank being connected with the first gas-liquid separator, a second electrolyte tank being connected with the second gas-liquid separator, an oxygen gas feed pipe, a hydrogen gas feed pipe, an oxygen gas exhaust pipe, and a hydrogen gas exhaust pipe. A circulator pump is proposed in order to supply the first electrolyte and the second electrolyte to the anode chamber and the cathode chamber (fully mixed electrolyte cycles). Alternatively, a first circulator pump supplies the first electrolyte from the first electrolyte tank to the anode chamber, and a second circulator pump supplies the second electrolyte from the second electrolyte tank to the cathode chamber (fully separated electrolyte cycles). A communicating pipe connects the liquid phase part of the first electrolyte tank and the liquid phase part of the second electrolyte tank, such that the electrolyte

3

can flow therethrough; the flow of electrolyte between the electrolyte tanks can proceed in either direction. The aforementioned arrangement involving separate gas-liquid separators and electrolyte tanks results in lower HTO and OTH values compared to an arrangement where the electrolyte retrieved from the anode chamber and the electrolyte retrieved from the cathode chamber are mixed in the circulator tank. However, the proposed arrangement does not provide a means for actively controlling the rate or extent of mixing between the anolyte and catholyte: only uncontrolled mixing occurs via the communicating pipe. This can, in case of the fully mixed electrolyte cycles, lead to relatively high HTO and OTH values, similar to the ones observed by Brauns *et al* for fully mixed cycles. In case of fully separated electrolyte cycles, this arrangement can lead to gradual steady increase in KOH concentration in the catholyte, which (as the concentration increases beyond the maximal electric conductivity range) results in decreased efficiency and increased corrosion of system components.

US2022333260 (Air Liquide, filed 20-10-2022) discloses an electrolyser system with a mixing line configuration for mixing the first electrolyte and the second electrolyte, the mixing of the electrolyte is performed periodically based on the current supplied to the stack. The mixing line configuration comprises various valves and a mixing device, where the orientation of these valves change based on the current density to withdraw an amount of the first electrolyte and the second electrolyte to fully or partially mix in the mixing device. The presence of plurality of valves and the mixing device complicates the system configuration and the valves susceptible to failure that can affect the functionality of the electrolyser system.

US2021262101 (Tokuyama Corp filed on 26-08-2021) discloses an electrolyser system comprising an electrolyte exchanger unit for mixing first electrolyte with second electrolyte. However, prior art does not disclose use of any mechanism for controlling the amount of electrolyte being mixed at the electrolyte exchanger.

US2022325423 (Air Liquide filed on 13-10-2022) discloses an electrolyser system comprising the first and second interconnect lines between anode pipe system and the cathode pipe system. The interconnect lines comprise several valves configured to withdraw electrolytes anode separator and cathode separator, the electrolytes are unmixed, partially mixed or fully mixed before supplying the electrolytes to anode section and cathode section of the stack. The prior art adopts plurality of valves that complicates the system configuration.

In the view of the above approach, there is a need for a streamlined configuration to balance the electrolyte concentration through electrolyte mixing while simultaneously minimizing the problem of gas crossover, thereby enabling safe and efficient operation of the electrolyser system.

## DISCLOSURE OF THE INVENTION

The object of the present invention is to reduce the oxygen to hydrogen ratio (OTH) within the produced hydrogen gas. Additionally, the present invention aims to achieve a distinct KOH concentration difference between the anolyte and the catholyte during electrolyser operation. Furthermore, the invention seeks to lower gas solubility in the catholyte, thereby enhancing the purity of hydrogen. Another objective of the present invention is to design a simplified electrolyte mixing configuration to optimize the footprint of the electrolyser system. Yet another objective of the present invention is to enable the electrolyser system to operate at lower current load points without causing the HTO or OTH to reach safety limits; a scenario particularly important when combining alkaline electrolysers with fluctuating renewable electricity supply. The above objective of the present invention can be achieved by the following technical solutions:

The various embodiments of the present invention disclose an electrolyser system 100 comprising: at least an electrolyser stack 101 producing a first gas-first electrolyte mixture at a first compartment of the stack 101, and a second gas-second electrolyte mixture at a second compartment of the stack 101. A first separator 103 receives the first gas-first electrolyte mixture via a first outlet 107 and separates a first electrolyte from a first gas. A second separator 104 receives the second gas-second electrolyte mixture via a second outlet 108 and separates a second electrolyte from a second gas. A first inlet 105c transports at least the first electrolyte into the stack 101 and a second inlet 106c transports at least the second electrolyte into the stack 101. A first suction line 105a connects a first pump 109 and the first separator 103 and a first head line 105b connects the first pump 109 and the first inlet 105c of the stack 101. A second suction line 106a connects a second pump 110 and the second separator 104, and a second head line 106b connects the second pump 110 and the second inlet 106c of the stack 101. An interconnect line 111 connecting the first head line 105b and the second suction line 106a is configured to supply a portion of the first electrolyte, at a predetermined mixing rate, from the first head line 105b to the second suction line 106a. The interconnect line 111 further comprises: a flow sensor 113 measuring the predetermined mixing rate of the first electrolyte; a flow valve 112 regulating the predetermined mixing rate of the first electrolyte; and a flow controller 114 digitally communicating with the flow sensor 113, the flow valve 112 and a current sensor 116 measuring the electric current applied to the stack 101. The predetermined mixing rate is directly proportional to an electric current applied to the stack 101. The flow controller 114 is configured to regulate the flow valve 112 based on a plurality of inputs from the flow sensor 113 and the current sensor 116, to control the predetermined mixing rate of the first electrolyte through the interconnect line 111.

According to one embodiment of the present invention, the system further comprises an equalization line 115

connecting the first separator 103 to the second separator, wherein a portion of the second electrolyte from the second separator 104 flows to the first separator 103 through the equalization line 115 to balance a first electrolyte level and a second electrolyte level.

According to one embodiment of the present invention, the first inlet 105c receives the first electrolyte from the first head line 105b and the second inlet 106c receives mixture of the first electrolyte and the second electrolyte from the second head line 106b.

According to one embodiment of the present invention, a plurality of stacks 101, comprising two or more stacks 101, are connected to the first separator 103 and the second separator 104, and the stacks 101 are configured to operate collectively on an equivalent stack 101 current.

According to one embodiment of the present invention, the system is pressurized to at least 5 barg (5-bar gauge) i.e. at least 500 kPa, and preferably to between 20 and 40 barg, i.e. between 2000 and 4000 kPa.

The various embodiments of the present invention disclose a method for electrolysis of water using at least one electrolyser stack 101 for producing a first gas and a second gas, the method comprising:

applying an electric current to the stack 101 while supplying a first electrolyte and a second electrolyte to a first compartment and a second compartment of the stack 101 to produce a first gas-first electrolyte mixture at the first compartment of the stack 101, and a second gas-second electrolyte mixture at the second compartment of the stack 101;

transporting the first gas-first electrolyte mixture to a first separator 103 via a first outlet 107;

transporting the second gas-second electrolyte mixture to a second separator 104 via a second outlet 108;

separating the first electrolyte from a first gas at the first separator 103;

separating the second electrolyte from a second gas at the second separator 104;

transporting the first electrolyte from the first separator 103 to a first pump 109 through a first suction line;

transporting a second electrolyte from the second separator 104 to a second pump 110 through a second suction line 106a;

transporting at least the first electrolyte from the first pump 109 to a first inlet 105c of the stack 101 through a first head line 105b;

transporting at least the second electrolyte from the second pump 110 to a second inlet 106c of the stack 101 through a second head line 106b;

supplying a portion of the first electrolyte, at a predetermined mixing rate, from the first head line 105b to the second suction line 106a through an interconnect line 111;

measuring the predetermined mixing rate using a flow meter connected in the interconnect line 111;

measuring the electric current applied to the stack 101 using a current sensor 116; and

configuring a flow controller 114 to regulate a flow valve 112 in the interconnect line 111 based on a plurality of inputs from the flow meter and the current sensor 116;

wherein the predetermined mixing rate of the first electrolyte is directly proportional to the electric current applied to the stack 101.

According to one embodiment of the present invention, the method further comprises the step of transporting a portion of second electrolyte from the second separator 104 to the first separator 103 through an equalization line 115 for balancing the electrolyte levels.

According to one embodiment of the present invention, the method further comprises the step of:

supplying the first electrolyte from the first head line 105b to the first inlet; and
supplying mixture of the first electrolyte and the second electrolyte from the second head line 106b to the second inlet.

According to one embodiment of the present invention, the first gas is a hydrogen gas, the first compartment is a cathode compartment, the first separator 103 is a hydrogen separator, and the first electrolyte is a catholyte; and wherein the second gas is an oxygen gas, the second compartment is an anode compartment, the second separator 104 is an oxygen separator, and the second electrolyte is an anolyte.

According to one embodiment of the present invention the first gas is the oxygen gas, the first compartment is the anode compartment, the first separator 103 is the oxygen separator, and the first electrolyte is the anolyte; and wherein the second gas is the hydrogen gas, the second compartment is the cathode compartment, the second separator 104 is the hydrogen separator, and the second electrolyte is the catholyte.

According to one embodiment of the present invention, the flow controller 114 is configured to calculate the predetermined mixing rate of the catholyte or the anolyte in interconnect line 111, to consequently increase the concentration of the catholyte supplied to the stack 101 to be higher than the concentration of the anolyte supplied to the stack 101.

According to one embodiment of the present invention, the method comprises the step of calculating the predetermined mixing rate of the catholyte or the anolyte in the interconnect line 111 consequently to increase the concentration of the catholyte supplied to the stack 101 to be higher than the concentration of the anolyte supplied to the stack 101.

According to one embodiment of the present invention, a difference between the concentration of the catholyte supplied to the stack 101 and the concentration of the anolyte supplied to the stack 101 is 1 wt% to 6 wt%, preferably around 5 wt%; wherein the concentration of the catholyte and the concentration of the anolyte is in the range between 20 wt% to 40 wt%, preferably between 26 wt% to 36 wt%.

According to one embodiment of the present invention, the method comprises steps of: controlling the predetermined mixing rate of the first electrolyte catholyte or the anolyte in the interconnect line 111 such that a difference between the concentration of the catholyte supplied to the stack 101 and the concentration of the anolyte supplied to the stack 101 is 1 wt% to 6 wt%, preferably around 5 wt%; and controlling the predetermined mixing rate of the catholyte or the anolyte in the interconnect line 111 such that the concentration of the catholyte and the anolyte is between 20 wt% to 40 wt%, preferably between 26 wt% to 36 wt%.

According to one embodiment of the present invention, a solubility of the hydrogen gas and the oxygen gas in the catholyte decreases by using the predetermined mixing rate in the interconnect line 111 for mixing the catholyte from the first head line 105b with the anolyte in the second suction line 106a, or vice versa.

According to one embodiment of the present invention, the method comprises steps of: decreasing a solubility of the hydrogen gas and the oxygen gas in the catholyte by using predetermined mixing rate in the interconnect line 111 for mixing the catholyte from the first head line 105b with the anolyte in the second suction line 106a, or vice versa.

According to one embodiment of the present invention, the method further comprises the step of setting the predetermined mixing rate in the interconnect line 111 to zero when the stack 101 is operating below a minimum stack current.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

BRIEF DESCRIPTION OF THE DRAWINGS:

The summary above, as well as the following detailed description of illustrative embodiments, is better understood when read in conjunction with the appended drawings. For the purpose of illustrating the present invention, exemplary constructions of the embodiments of the invention are shown in the drawings, with references to the following diagrams wherein:

Fig. 1 discloses an electrolyser system, according to a first embodiment of the invention.

Fig. 2 discloses the electrolyser system, according to an alternative to the first embodiment of the invention.

Fig. 3 discloses the electrolyser system according to a second embodiment of the invention.

Fig. 4 discloses the electrolyser system, according to an alternative to the second embodiment of the invention.

Fig. 5 discloses a graph depicting the potassium hydroxide (KOH) concentration changes over time when a catholyte is mixed with anolyte at a predetermined mixing rate of 0.86m$^3$/hr and stack current of 2kA, according to the present invention.

Fig. 6 discloses a graph depicting changes in hydrogen solubility and oxygen solubility as KOH concentration in the catholyte and the anolyte changes over time, according to the present invention.

Fig. 7 discloses a graph depicting the effect of current change on the KOH concentration difference in catholyte and anolyte while having a constant mixing configuration as shown in Fig. 1.

Fig. 8 discloses a graph depicting the outcome of controlled mixing rate on the KOH concentration difference in catholyte and anolyte for changing stack current, using a controlled mixing configuration as shown in Fig. 2.

Fig. 9 discloses graph comparing HTO and OTH values under different current loads ranging from 0 to 2kA for a full mixing configuration (comparative example), the constant partial mixing configuration (Fig. 1) and the controlled mixing configuration (Fig.2), according to the prior art and the present invention.

It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

DETAILED DESCRIPTION OF THE INVENTION

In the following detailed description, a reference is made to the accompanying drawings that form a part hereof, and in which the specific embodiments that may be practiced are shown by way of illustration. These embodiments are described in sufficient detail to enable those skilled in the art to practice the embodiments and it is to be understood that the logical, mechanical and other changes may be made without departing from the scope of the embodiments. The following detailed description is therefore not to be taken in a limiting sense.

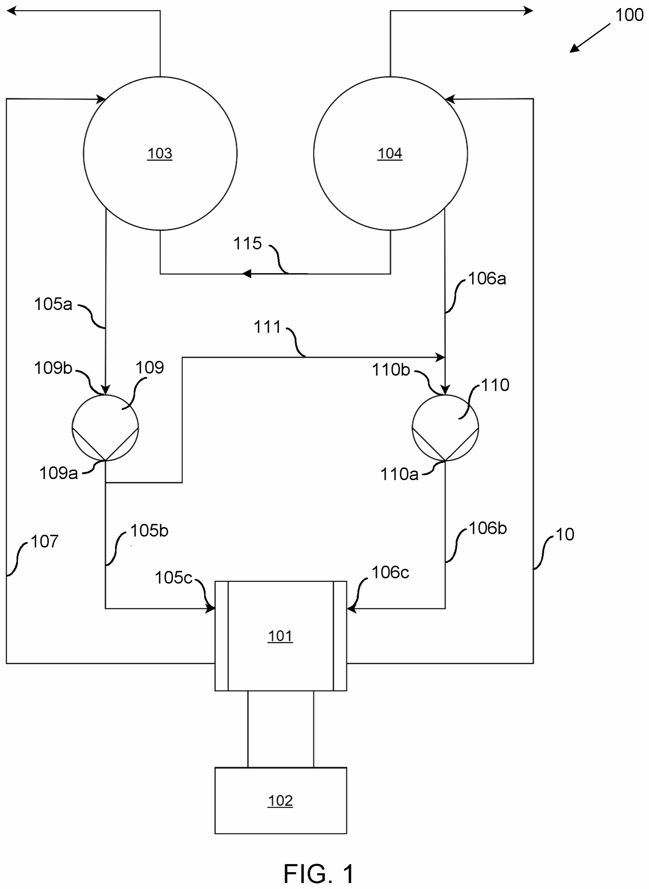

The various embodiments of the present invention disclose an electrolyser system 100 as shown in Fig. 1. The system 100 comprises an electrolyser stack 101, preferably an alkaline electrolyser stack 101 for electrochemically splitting water and generating hydrogen and oxygen. The electrolyser stack 101 comprises a first end plate, a second end plate and a plurality of electrolysis cells stacked between the end plates. The end plates serve as negative and positive terminals, respectively, when a DC power supply 102 is connected to the stack 101. Each cell in the stack 101 comprises of a plurality of cell components, including but not limited to at least two electrodes (one acting as an anode and other as cathode) placed on either side of a diaphragm, and a bipolar plate placed between the cells. The system 100 is pressurized to at least 5 barg, i.e. 500 kPa, and preferably 20 to 40 barg, i.e. 2000 to 4000 kPa.

The spaces between a first-type electrodes and the diaphragms form a first compartment of the stack 101, similarly the spaces between a second-type electrodes and the diaphragms form a second compartment of the stack 101. A first electrolyte is supplied to the first compartment of the stack 101 and a second electrolyte is supplied to the second compartment of the stack 101. When an electric current from the DC power supply 102 is applied to the stack 101, a first gas-first electrolyte mixture is formed at the first compartment and a second gas-second electrolyte mixture is formed at the second compartment. The gas-electrolyte mixtures are carried out of the stack 101 to a first separator 103 and a second separator 104 through a first outlet 107 and a second outlet 108, respectively. The first separator 103 separates a first gas and the first electrolyte from the first gas-first electrolyte mixture and the second separator 104 separates a second gas and the second electrolyte from the second gas-second electrolyte mixture. At least the first electrolyte from the first separator 103 is supplied back to the first compartment of the stack 101 through a first inlet 105c and at least the second electrolyte from the second separator 104 is supplied back to the second compartment through a second inlet 106c. The electrolyte levels in the separators are maintained to be at equal levels. According to one embodiment, the electrolyte is preferably aqueous potassium hydroxide (KOH) solution.

A first pump 109 is located between the first separator and the first inlet 105c, the first pump comprising a first pump head 109a and a first pump suction 109b. A first suction line 105a connects the first separator 103 to the first pump suction 109b and a first head line 105b connects the first pump head 109a to the first inlet 105c of the stack 101. Similarly, a second pump 110 is located between the second separator and the second inlet 106c, the second pump 110 comprising a second pump head 110a and a second pump suction 110b. A second suction line 106a connects the second separator 104 to the second pump suction 110b and a second head line 106b connects the second pump suction 110b to the second inlet 106c of the stack 101.

According to Himmelblau et al. (Solubilities of Inert Gases in Water. 0° C. to Near the Critical Point of Water, Journal of Chemical and Engineering Data, 1960, 5, 1, 10-15), the solubility of the product gases in the electrolyte medium decreases when the KOH concentration of the electrolyte supplied to the stack 100 increases, as depicted in the equations (3) and (4) below:

$$H2_{solubility} = H_{H2}/10^{3.14*wt} \; mols/_{m^3 Pa} \qquad (\text{Equation 3})$$

$$O2_{solubility} = H_{O2}/10^{3.66*wt} \; mols/_{m^3 Pa} \qquad (\text{Equation 4})$$

where $H_{2solubility}$ is gas solubility of $H_2$ in electrolyte (in units of mols/($m^3$ Pa), $O2_{solubility}$ is gas solubility of $O_2$ in electrolyte (in units of mols/ ($m^3$ Pa), $H_{H2}$ is Henry's law constant of hydrogen gas, $H_{O2}$ is Henry's law constant of oxygen gas, $wt$ is KOH concentration (in units of wt%) of electrolyte.

The Henry's law constants $H_{H2}$ and $H_{O2}$ are calculated using equation (5) and (6):

$$A(\log \overline{H_\iota})^2 + B\,(1/\overline{T})^2 + C(\log \overline{H_\iota})(1/\overline{T}) + D(\log \overline{H_\iota}) + E(1/\overline{T}) - 1 = 0, \quad (\text{Equation 5})$$

where

$$\overline{H_\iota} = (H_i \, / \, atm)\, 10^{-4} \;\; \text{and} \;\; 1/\overline{T} = (1/T/K)\, 10^3 \qquad (\text{Equation 6})$$

and wherein the $H_i$ is Henry's law constant that is replaced with $N_{H2}$ and $H_{O2}$ in units of atmospheres for hydrogen and oxygen, respectively, T is the temperature of the solution in Kelvin, and A, B, C, D, E are constants for a given gas taken from Table 1 below:

Table 1. Constants for calculating Henry's law constants for hydrogen and oxygen, used in Equation 5.

| Gas | A | B | C | D | E |
|---|---|---|---|---|---|
| $H_2$ | -0.1233 | -0.1366 | 0.02155 | -0.2368 | 0.8249 |
| $O_2$ | -0.0005943 | -0.1470 | -0.05120 | -0.1076 | 0.8447 |

As hydrogen gas is the desired product through electrolysis, the aim of present invention is to decrease the gas solubility in the catholyte to achieve hydrogen purity. This functionality is achieved by maintaining the catholyte KOH concentration higher than the anolyte KOH concentration. As the catholyte's gas solubility decreases and the gas impurities in the hydrogen due to electrolyte mixing reduces, yielding purer hydrogen.

Due to the anode and cathode-related electrochemical half reactions in alkaline water electrolysis, for every per mole of hydrogen produced, one mole of water is generated within the anode chamber and two moles of water are consumed within the cathode chamber of the electrolysis stack 101. In case of separated catholyte circulation and anolyte circulation, i.e. the first electrolyte and the second electrolyte are not mixed, the KOH concentration of the catholyte increases, due to water consumption, whereas the KOH concentration of anolyte decreases, due to water generation. Thus, the difference in the KOH concentrations increases over a certain time period. To achieve balanced catholyte and anolyte KOH concentrations while maintaining the catholyte KOH concentration higher than the anolyte KOH concentration, a configuration for mixing a portion of catholyte to the anolyte (or vice versa) is disclosed in the present invention, while keeping the KOH concentration of the catholyte and the anolyte within a desired range.

In order to facilitate mixing of the electrolyte before supplying to the stack 101, the electrolyser system 100 comprises an interconnect line 111 connecting the first head line 105b to the second suction line 106a as shown in Fig. 1. The first electrolyte with a first flow rate (A) in the first head line is split after the first pump 109 at the interconnect line 111. The interconnect line 111 is configured to transport a portion of the first electrolyte at a predetermined mixing rate (X) from the first head line 105b to the second suction line 106a. The remaining portion of the first electrolyte with a flow rate (A-X) is supplied to the first inlet 105c of the stack 101. The first electrolyte in the interconnect line 111 is mixed with the second electrolyte flowing at a second flow rate (B) in the second suction line 106a and the mixed electrolyte with a flow rate (B+X) is supplied to the second inlet 106c of the stack 101.

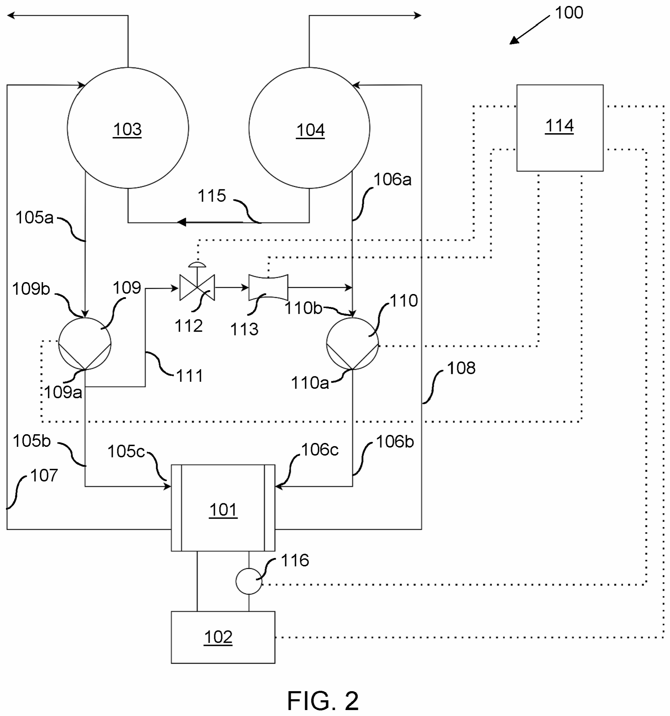

The present invention further discloses a controlled mixing configuration, for dynamically controlling the portion of the first electrolyte that is mixed with the second electrolyte, based on certain dynamic parameters of the stack. According to an embodiment of the present invention, to establish controlled mixing of the first electrolyte and the second electrolyte, the interconnect line 111 comprises a flow sensor 112 and a flow valve 113, and a flow controller 114 is in digital communication with the flow sensor 112 and the flow valve 113, as shown in Fig 2. The flow controller 114 regulates the flow valve 113 to control the predetermined mixing rate (X) of the first electrolyte flowing through the interconnect line 111, based on an input from the flow sensor 112.

According to a preferred embodiment of the present invention, the predetermined mixing rate (X) is directly proportional to the electric current applied to the stack 101.

Hence the flow controller 114 is in communication with a current sensor 116 that is connected to the DC power supply 102, and the flow controller 114 regulates the flow valve 113 to allow the predetermined mixing rate (X) based on an input received from the current sensor 116. For the estimated mixing rate, the flow controller 114 is configured to control the first pump and the second pump to regulate the first flow rate (A) and the second flow rate (B) such that the flow rates of the electrolyte supplied to the first inlet 105c and the second inlet 106c of the stack, i.e (A-X) and (B+X), are equal.

In order for the configurations in the present invention to work, an equalization line 115 between the first separator 103 and the second separator 104 is configured to balance the electrolyte levels in the separators. The electrolyte in the equalization line 115 flows in the direction opposite to the direction of flow in the interconnect line 111. As shown in Fig. 1 and 2, since the first electrolyte flows from the first head line 105b to the second suction line 106a, then the electrolyte flow in equalization line 115 is in opposite direction, i.e. the second electrolyte flows from the second separator 104 to the first separator 103.

According to an embodiment of the present invention, the electrolyser system 100 comprises a plurality of stacks connected to the first separator 103 and the second separator 104. The system configuration with the separators 103, 104, interconnect line 111 and the equalization line 115 connected to the first inlet 105c and the second inlet 106c remains the same as shown in Fig. 1 and Fig. 2. Multiple stacks in the system can operate at the same stack current or each stack can operate at a different stack current. The predetermined mixing rate (X) of the first electrolyte is controlled according to an equivalent stack current. The average of the various stack currents applied to the multiple stacks in the system is used to compute the equivalent stack current.

The present invention discloses a catholyte mixing configuration, referring to Fig. 1 and Fig. 2, wherein the first separator 103 is a hydrogen separator containing a catholyte and the second separator 104 is an oxygen separator containing an anolyte. The hydrogen separator 103 receives a hydrogen-catholyte mixture from a cathode compartment (which is the first compartment herein) and separates the catholyte from a hydrogen gas. Similarly, the oxygen separator 104 receives an oxygen-anolyte mixture from an anode compartment (which is the second compartment herein) and separates the anolyte from an oxygen gas. A catholyte pump 109 is placed between the hydrogen separator 103 and the cathode compartment of the stack 101, a catholyte suction line 105a connects the hydrogen separator 103 and the catholyte pump 109 and a catholyte head line 105b connects the catholyte pump 109 and the cathode compartment of the stack 101. An anolyte pump 110 is placed between the oxygen separator and the anode compartment of the stack 101. An anolyte suction line 106a is between the oxygen separator and the anolyte pump, and an anolyte head line 106b is between the anolyte pump 110 and the anode compartment of the stack 101. The interconnect line 111 is connected between the catholyte head line 105b and the anolyte suction line 106a for transporting a portion of catholyte from the catholyte head line at the predetermined mixing rate (X) and mixing the catholyte with the anolyte in the anolyte suction line 106a.

To achieve controlled mixing of the catholyte into the anolyte, as shown in Fig. 2, the catholyte flow through the interconnect line 111 is controlled by the flow valve 113. Using the data from the flow sensor 112, the flow controller 114 monitors the predetermined mixing rate (X) of the catholyte flowing through the interconnect line 111 and changes the mixing rate (X) by manipulating the flow valve 113 based on the current sensor 116 input. Furthermore, the electrolyte flow in equalization line 115 is from the oxygen separator to the hydrogen separator, i.e. in direction opposite to the electrolyte flow in the interconnect line 111.

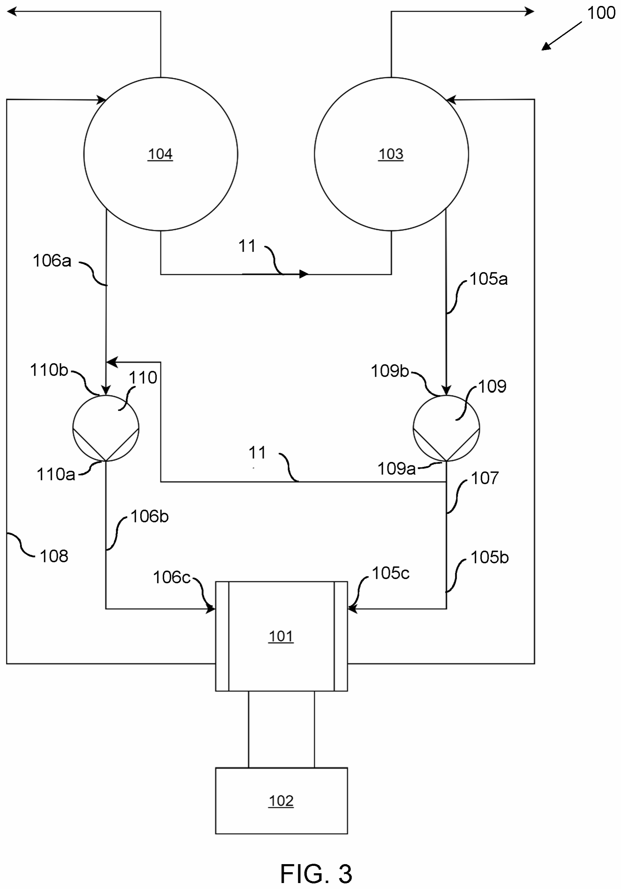

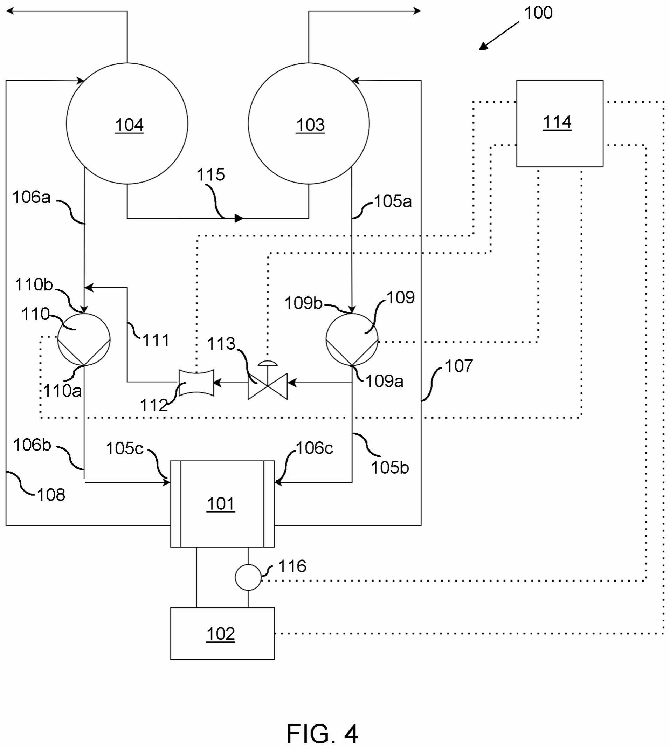

According to Fig. 3 and 4, the present invention discloses an anolyte mixing configuration, the first separator 103 is the oxygen separator containing the anolyte and the second separator 104 is the hydrogen separator containing the catholyte. The hydrogen separator 104 receives the hydrogen-catholyte mixture from the cathode compartment (that is the second compartment herein) and separates the catholyte from the hydrogen gas. Similarly, the oxygen separator 103 receives the oxygen-anolyte mixture from the anode compartment (that is the first compartment herein) and separates the anolyte from the oxygen gas. The anolyte pump 109 is placed between the oxygen separator 103 and the anode compartment of the stack 101, the catholyte pump 110 is placed between the hydrogen separator 104 and the catholyte compartment of the stack 101. The interconnect line 111 is connected from the anolyte head line 105b to the catholyte suction line 106b for transporting a portion of anolyte from the anolyte head line at the predetermined mixing rate (X) and mixing the same with the catholyte in the catholyte suction line.

As shown in Fig. 4, the mixing rate (X) of the anolyte is controlled by the flow valve 113. The flow controller 114 controls the flow valve 113 based on the input from the current sensor 116. Using the flow sensor 112 data, the flow controller 114 monitors the anolyte flow through the interconnect line 111 and changes the mixing rate (X) by manipulating the flow valve 113 based on the current sensor 116 input. Furthermore, the electrolyte flow in equalization line 115 is from the hydrogen separator to the oxygen separator, i.e. in direction opposite to the electrolyte flow in the interconnect line 111. According to the first and the second embodiment of the present invention, both configurations of interconnect line 111 are configured to consequently increase a difference between the KOH concentration of the catholyte supplied to the stack and the KOH concentration of the anolyte supplied to the stack, while maintaining the KOH concentration of the catholyte and the anolyte within a desired range to preserve their electric conductivity. For a desired catholyte KOH concentration, anolyte KOH concentration, and the difference between both KOH concentrations, the flow controller is configured to calculate the predetermined mixing rate (X) of the catholyte or the anolyte in the first head line, to increase the concentration of the catholyte supplied to the stack to be higher than the concentration of the anolyte supplied to the stack, based on the stack current. As the catholyte KOH concentration increases, the solubility of the hydrogen gas and the oxygen gas in the catholyte decreases and thus the gas impurities due to electrolyte mixing decrease in the cathode compartment, yielding purer hydrogen gas.

According to an embodiment of the present invention, the mixing rate (X) is given as a flow rate which can be measured as a volumetric flow rate, a mass flow rate and a molar flow rate.

According to an embodiment of the present invention, the KOH concentration of the catholyte and the KOH concentration of the anolyte is maintained between the desired range from 20 wt% to 40wt%, preferably between 26 wt% to 36 wt% for optimal performance of the electrolyser. Furthermore, a difference between the concentration of the catholyte supplied to the stack and the concentration of the anolyte supplied to the stack is 1 wt% to 6 wt%, preferably around 5 wt%.

The change in KOH concentration of the catholyte and the anolyte is caused by the change in consumption rate of water during the electrolysis process, which is proportional to the current supplied to the stack 101. The mass balance between anolyte and catholyte has the relation given in equation (7) when the portion of catholyte is mixed with the anolyte (Fig. 1 and 2). Correspondingly, the mass balance relation between anolyte and catholyte is given by equation (8) when the portion of anolyte is mixed with the catholyte (Fig. 3 and 4).

$$\frac{wt_{catholyte}}{wt_{anolyte}} \approx \frac{R_M + R_{WC}}{R_M} \qquad \text{(Equation 7)}$$

$$\frac{wt_{anolyte}}{wt_{catholyte}} \approx \frac{R_M - R_{WC}}{R_M} \qquad \text{(Equation 8)}$$

where $wt_{catholyte}$ is KOH concentration (in units of wt%) of catholyte, $wt_{anolyte}$ is KOH concentration (in units of wt%) of anolyte, $R_M$ is the mixing rate (X) of the electrolyte in the interconnect line 111, $R_{WC}$ is water consumption rate during the electrolysis process. The mixing rate (X) and the water consumption rate are measured as mass flow rate in kg/hr.

The above equations (7) and (8) are valid for cases when $wt_{catholyte} \neq wt_{anolyte}$.

The water consumption rate is a function of the stack current, calculated using equation (9):

$$R_{WC} = I \times \frac{N}{2 \times F} \times M_W \qquad \text{(Equation 9)}$$

In equation (9), $I$ is the electric current supplied to the stack, $N$ is number of cells in the stack, $F$ is Faraday constant and $M_W$ is molar mass of the water.

For a desired KOH concentration of the catholyte and the anolyte and the corresponding KOH concentration difference, the flow controller 114 is configured to keep the KOH concentration of the catholyte and anolyte stable across different current loads by varying the mixing rate (X) through the interconnect line 111 according to the current loads. Based on the stack current applied, the flow controller 114 estimates and adjusts the mixing rate (X) of the electrolyte through the interconnect line 111 using equations (7) and (8) to maintain the desired KOH concentrations for the anolyte and the catholyte.

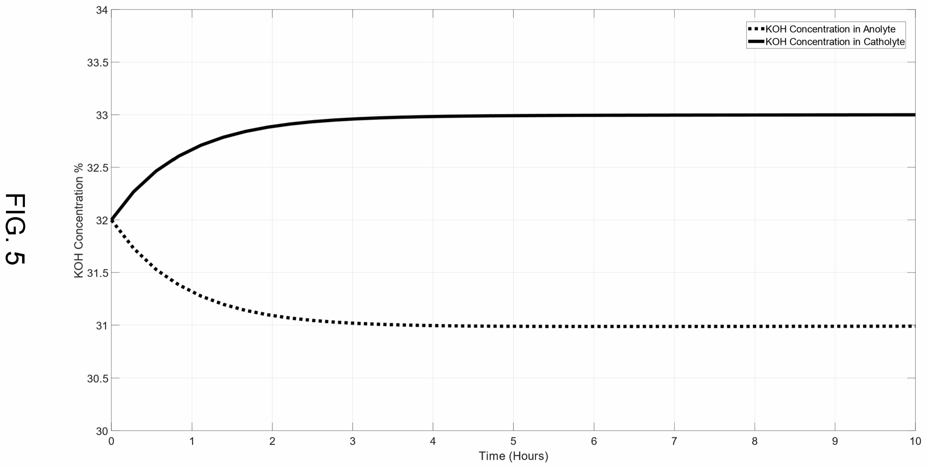

The technical effects of the present invention are shown in Figs. 5 to 9 using a MATLAB simulation. The system 100 operating at 32 bar pressure at 85 C° temperature are the working conditions considered for the simulation. The simulation is considered for a 0.5 MW electrolyser stack with 120 cells, producing 100 Nm³/hr of hydrogen. The circulation rate of anolyte and catholyte is 5 m³/h each. The catholyte mixing configuration shown in Fig. 1 and Fig. 2 is considered for the simulation.

Fig. 5 shows the KOH concentration changes over time when the catholyte is mixed with anolyte at a pre-determined mixing rate (X) of 0.86m³/h using the catholyte mixing configuration shown in Fig. 1. The current applied to the stack is 2kA and the initial KOH concentration of the catholyte and the anolyte is 32 wt%. For the given stack current and an initial catholyte and the anolyte KOH concentration of 32 wt%, the desired KOH concentration of catholyte is set to 33 wt% and KOH concentration of the anolyte is set to 31%. Based on the stack current and the desired KOH concentrations, the controller calculates the required mixing rate (X), which is 0.86 m³/h. The introduction of the catholyte flow through the interconnect line 111 facilitates the electrolyte mixing process, resulting in the KOH concentration of the catholyte being higher than the KOH concentration of the anolyte. As seen in Fig. 5, at Time=0 hours, i.e. before beginning of the electrolyte mixing, the KOH concentration of the catholyte and the anolyte is 32 wt%. As time progresses, due to the system configuration in Fig. 2, the KOH concentration of the catholyte gradually increases and the KOH concentration of the anolyte gradually decreases from Time = 0 to 3 hours. Around Time = 4 hours, the concentration of the catholyte reaches 33 wt% and the concentration of the anolyte reaches 31 wt%, and subsequently both KOH concentrations remain constant at 33 wt% and 31 wt%.

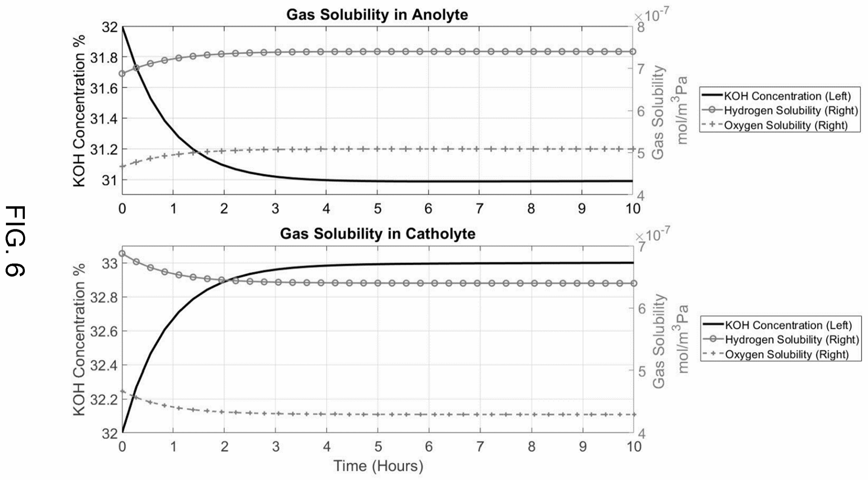

Fig. 6 shows change in hydrogen solubility and oxygen solubility in the electrolyte as the KOH concentration in the catholyte and the anolyte changes over time, according to the present invention. The top graph of Fig. 6 shows the hydrogen solubility and the oxygen solubility of the anolyte. The bottom graph of Fig. 6 depicts the hydrogen solubility and the oxygen solubility of the catholyte. Due to the electrolyte mixing configuration in the present invention, it can be observed from Fig. 6, that as the KOH concentration of the catholyte increases with time, both the hydrogen solubility and the oxygen solubility of the catholyte decrease. Subsequently, when the said catholyte with a higher KOH concentration is supplied to the cathode of the cell, the gas impurities in the hydrogen produced at the cathode side of the stack 101 are reduced. Similarly, as the KOH concentration of the anolyte decreases with time, the solubility of the hydrogen gas and the oxygen gas in the anolyte increases. However, with the controlled mixing configuration, the impurities resulting from increased solubility of the anolyte are mitigated using electrolyte mixing. As seen from the top graph of Fig. 6, at Time=0 hours, the KOH concentration of the anolyte is 32 wt%, the hydrogen solubility of the anolyte is $6.87e^{-7}$ mol/m$^3$ Pa, and oxygen solubility of the anolyte is around $4.67e^{-7}$ mol/m$^3$Pa. As the KOH concentration of the anolyte decreases to 31 wt% at Time =5 hours, the hydrogen solubility of the anolyte increases to $7.4e^{-7}$ mol/m$^3$ Pa and the oxygen solubility increases to $5.1e^{-7}$ mol/m$^3$ Pa. Referring to the bottom graph, when the KOH concentration of the catholyte is 32 wt% at Time=0 hours, the hydrogen solubility of the catholyte is $6.87e^{-7}$ mol/m$^3$Pa and the oxygen solubility is $4.67e^{-7}$ mol/m$^3$Pa. At Time = 5 hours, as the KOH concentration of the catholyte increases to 33 wt%, the hydrogen solubility decreases to $6.4e^{-7}$ mol/m$^3$Pa and the oxygen solubility reduces to $4.3e^{-7}$ mol/m$^3$Pa.

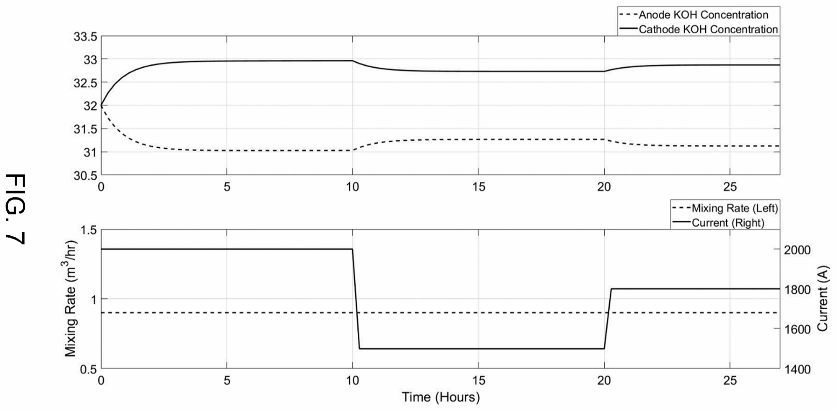

Fig. 7 shows variation in the KOH concentration of the catholyte and the anolyte when the stack current is varied from 2.0 kA to 1.5 kA to 1.8 kA and the mixing rate (X) is constant (0.9 m$^3$/h) throughout the simulation (according to the embodiment shown in Fig. 1). At Time = 0-10 hours, when the stack current applied is 2 kA, the KOH concentration of the catholyte rises to 32.96 wt% and the KOH concentration of the anolyte decreases to 31.04 wt%. At Time = 10 to 20 hours, the stack current is decreased to 1.5 kA, the catholyte KOH concentration decreases to 32.73 wt%, while the anolyte KOH concentration increases to 31.27 wt%. After Time = 20 hours, the stack current is increased to 1.8 kA, correspondingly the catholyte KOH concentration increases to 32.87 wt%, while the anolyte KOH concentration decreases to 31.13 wt%.

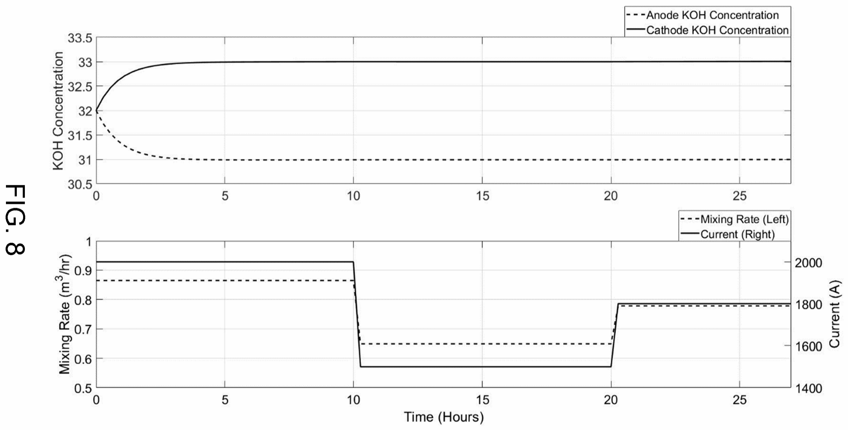

Fig. 8 shows variation in the KOH concentration of the catholyte and the anolyte when the stack current is varied from 2 kA to 1.5kA to 1.8 kA and the mixing rate (X) is varied from 0.86 m$^3$/h to 0.64 m$^3$/h to 0.77 m$^3$/h according to the stack current (embodiment shown in Fig. 2). At Time = 0 to 10 hours, the system produces hydrogen with current value 2 kA, and the controller calculates the mixing rate (X) as 0.86 m$^3$/h, the catholyte KOH concentration gradually increases from 32 wt% to 33 wt% and the anolyte KOH concentration decreases from 32wt% to 31 wt%. At Time = 10 to 20 hours the stack current is decreased to 1.5 kA, and the controller calculates the new mixing rate (X) as 0.64 m$^3$/hr. Since the mixing rate (X) is changed according to the stack current, the KOH contraction of the catholyte and the anolyte remains stable at 33 wt% and 31 wt% respectively. After Time = 20 hours, when the stack current is increased to 1.8 kA and the mixing rate (X) is corresponding increased to 0.77 m$^3$/h, the KOH concentration of catholyte and the anolyte continue to remain at 33 wt% and 31 wt% respectively.

Comparing Fig. 7 and Fig. 8, the observation can be made that the KOH concentration of the catholyte and the anolyte is constant when the mixing rate (X) is varied according to the stack current, that enables the hydrogen purity to be kept constant.

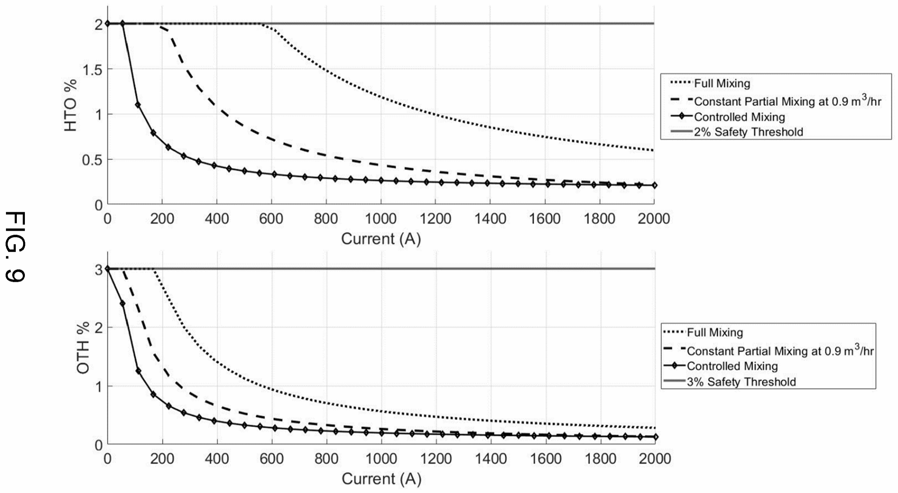

Fig. 9 discloses graph comparing HTO and OTH values under different current loads ranging from 0 to 2 kA for a full mixing configuration (comparative example), the constant partial mixing configuration (Fig. 1) and the controlled mixing configuration (Fig.2), according to the prior art and the present invention As shown in the top graph, the minimum stack current at which different configurations can operate is estimated when the HTO level for the configurations is below safety threshold of 2%. For full mixing configuration, the minimum operating stack current is around 550 A, whereas for the constant mixing configuration, the minimum stack current is around 220 A. The minimum stack current for controlled mixing configuration is 60 A, thus allowing the stack to operate safely in a wider range of current loads. Furthermore, a mean HTO across the operating current range is calculated as 0.92%, 0.51% and 0.34% for fully mixing configuration, constant mixing configuration and controlled mixing configurations, respectively. When controlled mixing is used in place of full mixing, about 62% of the fully mixing mean HTO reduces. and HTO decreases by 32% of the constant mixing mean HTO when controlled mixing is adopted instead of the constant mixing.

The bottom graph depicts the purity of the hydrogen product obtained from the three configurations. At 2 kA, the OTH is high in full mixing configuration with 0.28%. OTH is significantly lower with the constant mixing configuration and the controlled mixing configuration, with OTH being 0.13% and 0.12% respectively at stack current of 2 kA. A mean OTH across the operating current range is calculated as 0.69%, 0.46% and 0.38% for fully mixing configuration, constant mixing configuration and controlled mixing configuration respectively. A reduction of almost 43% in the fully mixing mean OTH is seen when controlled mixing is substituted for full mixing, and HTO decreases by 18% of the constant mixing mean OTH when controlled mixing is adopted instead of the constant mixing.

The present invention discloses different configurations aimed at improving the efficiency of hydrogen production in the electrolyser system. By decreasing the gas solubility of catholyte, the invention yields purer hydrogen product, while simultaneously reducing gas impurities resulting from electrolyte mixing by adopting the partial mixing technique. Furthermore, the present invention implements the controlled mixing process based on stack current and desired KOH concentration of the catholyte and the anolyte, stabilizing OTH and HTO parameters. These advancements offer several benefits, including enhanced hydrogen purity, minimized gas impurities, improved control and stability, and increased operational efficiency.

LIST OF DETAILS

| | |
|---|---|
| 100 | electrolyser system |
| 101 | electrolyser stack |
| 102 | DC power supply |
| 103 | first separator |
| 104 | second separator |
| 105a | first suction line |
| 105b | first head line |
| 105c | first inlet |
| 106a | second suction line |
| 106b | second head line |
| 106c | second inlet |
| 107 | first outlet |
| 108 | second outlet |
| 109 | first pump |
| 109a | first pump head |
| 109b | first pump suction |
| 110 | second pump |
| 110a | second pump head |
| 110b | second pump suction |
| 111 | interconnect line |
| 112 | flow valve |
| 113 | flow sensor |
| 114 | flow controller |
| 115 | equalization line |
| 116 | current sensor |

**Claims**

1. An electrolyser system (100) comprising:

at least an electrolyser stack (101) producing a first gas-first electrolyte mixture at a first compartment of the stack (101), and a second gas-second electrolyte mixture at a second compartment of the stack (101);
a first separator (103) receiving the first gas-first electrolyte mixture via a first outlet (107) and separating a first electrolyte from a first gas;
a second separator (104) receiving the second gas-second electrolyte mixture via a second outlet (108) and separating a second electrolyte from a second gas;
a first inlet (105c) for transporting at least the first electrolyte into the stack (101) and a second inlet (106c) for transporting at least the second electrolyte into the stack (101);
a first suction line (105a) connecting a first pump (109) and the first separator (103);
a first head line (105b) connecting the first pump (109) and the first inlet (105c) of the stack (101);
a second suction line (106a) connecting a second pump (110) and the second separator (104);
a second head line (106b) connecting the second pump (110) and the second inlet (106c) of the stack (101); and
an interconnect line (111) connecting the first head line (105b) and the second suction line (106a);
wherein the interconnect line (111) further comprises:

a flow sensor (113) measuring the predetermined mixing rate of the first electrolyte;
a flow valve (112) regulating the predetermined mixing rate of the first electrolyte; and
a flow controller (114) digitally communicating with the flow sensor (113), the flow valve (112) and a current sensor (116) measuring the electric current applied to the stack (101);

wherein the interconnect line (111) is configured to supply a portion of the first electrolyte, at a predetermined mixing rate, from the first head line (105b) to the second suction line (106a);
wherein the flow controller (114) is configured to regulate the flow valve (112) based on a plurality of inputs from the flow sensor (113) and the current sensor (116), to control the predetermined mixing rate of the first electrolyte through the interconnect line (111); and
wherein the predetermined mixing rate is directly proportional to an electric current applied to the stack (101).

2. The electrolyser system according to any of the preceding claims, wherein the system further comprises an equalization line (115) connecting the first separator (103) to the second separator, wherein a portion of the second electrolyte from the second separator (104) flows to the first separator (103) through the equalization line (115) to balance a first electrolyte level and a second electrolyte level.

3. The electrolyser system according to any of the preceding claims, wherein the first inlet (105c) receives the first electrolyte from the first head line (105b) and the second inlet (106c) receives mixture of the first electrolyte and the second electrolyte from the second head line (106b).

4. The electrolyser system according to any of the preceding claims, wherein a plurality of stacks (101), comprising two or more stacks (101), are connected to the first separator (103) and the second separator (104), and the stacks (101) are configured to operate collectively on an equivalent stack current.

5. The electrolyser system according to any of the preceding claims, wherein the first gas is a hydrogen gas, the first compartment is a cathode compartment, the first separator (103) is a hydrogen separator, and the first electrolyte is a catholyte; and wherein the second gas is an oxygen gas, the second compartment is an anode compartment, the second separator (104) is an oxygen separator, and the second electrolyte is an anolyte.

6. The electrolyser system according to any one of claims 1 to 4, wherein the first gas is the oxygen gas, the first compartment is the anode compartment, the first separator (103) is the oxygen separator, and the first electrolyte is the anolyte; and wherein the second gas is the hydrogen gas, the second compartment is the cathode compartment, the second separator (104) is the hydrogen separator, and the second electrolyte is the catholyte.

7. The electrolyser system according to any of the preceding claims, wherein the flow controller (114) is configured to calculate the predetermined mixing rate of the catholyte or the anolyte in interconnect line (111), to consequently increase the concentration of the catholyte supplied to the stack (101) to be higher than the concentration of the anolyte supplied to the stack (101).

8. The electrolyser system according to claim 7, wherein a difference between the concentration of the catholyte supplied to the stack (101) and the concentration of the anolyte supplied to the stack (101) is from 1 wt% to 6 wt%, preferably around 5 wt%; wherein the concentration of the catholyte and the concentration of the anolyte is in the range between 20 wt% to 40 wt%, preferably between 26 wt% to 36 wt%.

9. The electrolyser system according to claims 7 or 8, wherein a solubility of the hydrogen gas and the oxygen gas in the catholyte decreases by using the predetermined mixing rate in the interconnect line (111) for mixing the catholyte from the first head line (105b) with the anolyte in the second suction line (106a), or vice versa.

10. The electrolyser system according to any of the preceding claims, wherein the system is pressurized to at least 500 kPa, and preferably to between 2000 and 4000 kPa.

11. A method for electrolysis of water using at least one electrolyser stack (101) for producing a first gas and a second gas, the method comprising:

applying an electric current to the stack (101) while supplying a first electrolyte and a second electrolyte to a first compartment and a second compartment of the stack (101) to produce a first gas-first electrolyte mixture at the first compartment of the stack (101), and a second gas-second electrolyte mixture at the second compartment of the stack (101);

transporting the first gas-first electrolyte mixture to a first separator (103) via a first outlet (107);

transporting the second gas-second electrolyte mixture to a second separator (104) via a second outlet (108);

separating the first electrolyte from a first gas at the first separator (103);

separating the second electrolyte from a second gas at the second separator (104);

transporting the first electrolyte from the first separator (103) to a first pump (109) through a first suction line;

transporting a second electrolyte from the second separator (104) to a second pump (110) through a second suction line (106a);

transporting at least the first electrolyte from the first pump (109) to a first inlet (105c) of the stack (101) through a first head line (105b);

transporting at least the second electrolyte from the second pump (110) to a second inlet (106c) of the stack (101) through a second head line (106b);

supplying a portion of the first electrolyte, at a predetermined mixing rate, from the first head line (105b) to the second suction line (106a) through an interconnect line (111);

measuring the predetermined mixing rate using a flow meter connected in the interconnect line (111);

measuring the electric current applied to the stack (101) using a current sensor (116); and

configuring a flow controller (114) to regulate a flow valve (112) in the interconnect line (111) based on a plurality of inputs from the flow meter and the current sensor (116);

wherein the predetermined mixing rate of the first electrolyte is directly proportional to the electric current applied to the stack (101).

12. The method according to any one of claims 11, further comprises the step of transporting a portion of second electrolyte from the second separator (104) to the first separator (103) through an equalization line (115) for balancing the electrolyte levels.

13. The method according to any one of claims 11 or 12, further comprises the step of:

supplying the first electrolyte from the first head line (105b) to the first inlet; and

supplying mixture of the first electrolyte and the second electrolyte from the second head line (106b) to the second inlet.

14. The method according to any one of claims 11 to 13, wherein the first gas is a hydrogen gas, the first compartment is a cathode compartment, the first separator (103) is a hydrogen separator, and the first electrolyte is a catholyte; and wherein the second gas is an oxygen gas, the second compartment is an anode compartment, the second separator (104) is an oxygen separator, and the second electrolyte is an anolyte.

15. The method according to any one of claims 11 to 13, wherein the first gas is the oxygen gas, the first compartment is the anode compartment, the first separator (103) is the oxygen separator, and the first electrolyte is the anolyte; and wherein the second gas is the hydrogen gas, the second compartment is the cathode compartment, the second separator (104) is the hydrogen separator, and the second electrolyte is the catholyte.

16. The method according to any one of claim 11 to 15, wherein the method comprises the step of calculating the predetermined mixing rate of the catholyte or the anolyte in the interconnect line (111) consequently to increase the concentration of the catholyte supplied to the stack (101) to be higher than the concentration of the anolyte supplied to the stack (101).

17. The method according to claim 16, wherein the method comprises steps of:

controlling the predetermined mixing rate of the catholyte or the anolyte in the interconnect line (111) such that a difference between the concentration of the catholyte supplied to the stack (101) and the concentration of the anolyte supplied to the stack (101) is from 1 wt% to 6 wt%, preferably around 5 wt%; and

controlling the predetermined mixing rate of the catholyte or the anolyte in the interconnect line (111) such that the concentration of the catholyte and the anolyte is between 20 wt% to 40 wt%, preferably between 26 wt% to 36 wt%.

18. The method according to claims 16 or 17, wherein the method comprises steps of: decreasing a solubility of the hydrogen gas and the oxygen gas in the catholyte by using predetermined mixing rate in the interconnect line (111) for mixing the catholyte from the first head line (105b) with the anolyte in the second suction line (106a), or vice versa.

**19.** The method according to any one of the claims 11 to 18, further comprises the step of setting the predetermined mixing rate in the interconnect line (111) to zero when the stack (101) is operating below a minimum stack current.

**Patentansprüche**

**1.** Elektrolyseursystem (100), umfassend:

mindestens einen Elektrolyseur-Stack (101), der in einer ersten Kammer des Stacks (101) ein Gemisch aus einem ersten Gas und einem ersten Elektrolyten und in einer zweiten Kammer des Stacks (101) ein Gemisch aus einem zweiten Gas und einem zweiten Elektrolyten produziert;
einen ersten Separator (103), der das Gemisch aus dem ersten Gas und dem ersten Elektrolyten über einen ersten Auslass (107) aufnimmt und den ersten Elektrolyten von dem ersten Gas trennt;
einen zweiten Separator (104), der das Gemisch aus dem zweiten Gas und dem zweiten Elektrolyten über einen zweiten Auslass (108) aufnimmt und den zweiten Elektrolyten von dem zweiten Gas trennt;
einen ersten Einlass (105c) zum Transportieren zumindest des ersten Elektrolyten in den Stack (101) und einen zweiten Einlass (106c) zum Transportieren zumindest des zweiten Elektrolyten in den Stack (101);
eine erste Ansaugleitung (105a), die eine erste Pumpe (109) und den ersten Separator (103) verbindet;
eine erste Druckleitung (105b), die die erste Pumpe (109) und den ersten Einlass (105c) des Stacks (101) verbindet;
eine zweite Ansaugleitung (106a), die eine zweite Pumpe (110) und den zweiten Separator (104) verbindet;
eine zweite Druckleitung (106b), die die zweite Pumpe (110) und den zweiten Einlass (106c) des Stacks (101) verbindet; und
eine Verbindungsleitung (111), die die erste Druckleitung (105b) und die zweite Ansaugleitung (106a) verbindet;
wobei die Verbindungsleitung (111) ferner umfasst:

einen Durchflusssensor (113), der die vorbestimmte Mischrate des ersten Elektrolyten misst;
ein Durchflussventil (112), das die vorbestimmte Mischrate des ersten Elektrolyten reguliert; und
einen Durchflussregler (114), der mit dem Durchflusssensor (113), dem Durchflussventil (112) und einem Stromsensor (116) digital kommuniziert, der den an den Stack (101) angelegten elektrischen Strom misst;
wobei die Verbindungsleitung (111) dazu ausgebildet ist, einen Teil des ersten Elektrolyten mit einer vorbestimmten Mischrate von der ersten Druckleitung (105b) zu der zweiten Ansaugleitung (106a) zu fördern;
wobei der Durchflussregler (114) dazu ausgebildet ist, das Durchflussventil (112) auf der Grundlage einer Mehrzahl von Eingaben von dem Durchflusssensor (113) und
von dem Stromsensor (116) zu regulieren, um die vorbestimmte Mischrate des ersten Elektrolyten durch die Verbindungsleitung (111) zu steuern; und
wobei die vorbestimmte Mischrate direkt proportional zu einem an den Stack (101) angelegten elektrischen Strom ist.

**2.** Elektrolyseursystem nach Anspruch 1, wobei das System ferner eine Ausgleichsleitung (115) umfasst, die den ersten Separator (103) mit dem zweiten Separator verbindet, wobei ein Teil des zweiten Elektrolyten aus dem zweiten Separator (104) durch die Ausgleichsleitung (115) zu dem ersten Separator (103) fließt, um einen ersten Elektrolytspiegel und einen zweiten Elektrolytspiegel auszugleichen.

**3.** Elektrolyseursystem nach einem der vorhergehenden Ansprüche, wobei der erste Einlass (105c) den ersten Elektrolyten aus der ersten Druckleitung (105b) aufnimmt und der zweite Einlass (106c) eine Mischung aus dem ersten Elektrolyten und dem zweiten Elektrolyten aus der zweiten Druckleitung (106b) aufnimmt.

**4.** Elektrolyseursystem nach einem der vorhergehenden Ansprüche, wobei eine Mehrzahl von Stacks (101), die zwei oder mehr Stacks (101) umfasst, mit dem ersten Separator (103) und dem zweiten Separator (104) verbunden ist und die Stacks (101) dazu ausgebildet sind, gemeinsam mit einem äquivalenten Stack-Strom betrieben zu werden.

**5.** Elektrolyseursystem nach einem der vorhergehenden Ansprüche, wobei das erste Gas ein Wasserstoffgas ist, die erste Kammer eine Kathodenkammer ist, der erste Separator (103) ein Wasserstoffseparator ist und der erste Elektrolyt ein Katholyt ist; und wobei das zweite Gas ein Sauerstoffgas ist, die zweite Kammer eine Anodenkammer ist, der zweite Separator (104) ein Sauerstoffseparator ist und der zweite Elektrolyt ein Anolyt ist.

6. Elektrolyseursystem nach einem der Ansprüche 1 bis 4, wobei das erste Gas das Sauerstoffgas ist, die erste Kammer die Anodenkammer ist, der erste Separator (103) der Sauerstoffseparator ist und der erste Elektrolyt der Anolyt ist; und wobei das zweite Gas das Wasserstoffgas ist, die zweite Kammer die Kathodenkammer ist, der zweite Separator (104) der Wasserstoffseparator ist und der zweite Elektrolyt der Katholyt ist.

7. Elektrolyseursystem nach einem der vorhergehenden Ansprüche, wobei der Durchflussregler (114) dazu ausgebildet ist, die vorbestimmte Mischrate des Katholyten oder des Anolyten in der Verbindungsleitung (111) zu berechnen, um folglich die Konzentration des dem Stack (101) zugeführten Katholyten so zu erhöhen, dass sie höher ist als die Konzentration des dem Stack (101) zugeführten Anolyten.

8. Elektrolyseursystem nach Anspruch 7, wobei die Differenz zwischen der Konzentration des dem Stack (101) zugeführten Katholyten und der Konzentration des dem Stack (101) zugeführten Anolyten zwischen 1 Gew.-% und 6 Gew.-%, vorzugsweise etwa 5 Gew.-%, beträgt; wobei die Konzentration des Katholyten und die Konzentration des Anolyten im Bereich zwischen 20 Gew.-% und 40 Gew.-%, vorzugsweise zwischen 26 Gew.-% und 36 Gew.-%, liegt.

9. Elektrolyseursystem nach Anspruch 7 oder 8, wobei die Löslichkeit des Wasserstoffgases und des Sauerstoffgases im Katholyten durch Verwendung der vorbestimmten Mischrate in der Verbindungsleitung (111) zum Mischen des Katholyten aus der ersten Druckleitung (105b) mit dem Anolyten in der zweiten Ansaugleitung (106a) oder umgekehrt verringert wird.

10. Elektrolyseursystem nach einem der vorhergehenden Ansprüche, wobei das System auf mindestens 500 kPa und vorzugsweise auf zwischen 2000 und 4000 kPa unter Druck gesetzt wird.

11. Verfahren zur Elektrolyse von Wasser unter Verwendung mindestens eines Elektrolyseur-Stacks (101) zur Erzeugung eines ersten Gases und eines zweiten Gases, wobei das Verfahren umfasst:

Anlegen eines elektrischen Stroms an den Stack (101), während ein erster Elektrolyt und ein zweiter Elektrolyt einer ersten Kammer und einer zweiten Kammer des Stacks (101) zugeführt werden, um ein Gemisch aus einem ersten Gas und einem ersten Elektrolyten in der ersten Kammer des Stacks (101) und ein Gemisch aus einem zweiten Gas und einem zweiten Elektrolyten in der zweiten Kammer des Stacks (101) zu erzeugen;
Transportieren des Gemisches aus dem ersten Gas und dem ersten Elektrolyten zu einem ersten Separator (103) über einen ersten Auslass (107);
Transportieren des Gemisch aus dem zweiten Gas und dem zweiten Elektrolyten zu einem zweiten Separator (104) über einen zweiten Auslass (108);
Trennen des ersten Elektrolyten von einem ersten Gas an dem ersten Separator (103);
Trennen des zweiten Elektrolyten von einem zweiten Gas an dem zweiten Separator (104);
Transportieren des ersten Elektrolyten von dem ersten Separator (103) zu einer ersten Pumpe (109) durch eine erste Ansaugleitung (105a);
Transportieren eines zweiten Elektrolyten von dem zweiten Separator (104) zu einer zweiten Pumpe (110) durch eine zweite Ansaugleitung (106a);
Transportieren zumindest des ersten Elektrolyten von der ersten Pumpe (109) zu einem ersten Einlass (105c) des Stacks (101) durch eine erste Druckleitung (105b);
Transportieren zumindest des zweiten Elektrolyten von der zweiten Pumpe (110) zu einem zweiten Einlass (106c) des Stacks (101) durch eine zweite Druckleitung (106b);
Zuführen eines Teils des ersten Elektrolyten mit einer vorbestimmten Mischrate von der ersten Druckleitung (105b) zu der zweiten Ansaugleitung (106a) durch eine Verbindungsleitung (111);
Messen der vorbestimmten Mischrate unter Verwendung eines in die Verbindungsleitung (111) geschalteten Durchflussmessers;
Messen des an den Stack (101) angelegten elektrischen Stroms unter Verwendung eines Stromsensors (116); und
Konfigurieren eines Durchflussreglers (114) zum Regeln eines Durchflussventils (112) in der Verbindungsleitung (111) auf der Grundlage einer Mehrzahl von Eingaben von dem Durchflussmesser und von dem Stromsensor (116);
wobei die vorbestimmte Mischrate des ersten Elektrolyten direkt proportional zu dem an den Stack (101) angelegten elektrischen Strom ist.

12. Verfahren nach Anspruch 11 umfasst ferner den Schritt des Transportierens eines Teils des zweiten Elektrolyten vom zweiten Separator (104) zu dem ersten Separator (103) durch eine Ausgleichsleitung (115), um die Elektrolytspiegel auszugleichen.

**13.** Verfahren nach einem der Ansprüche 11 oder 12, das ferner den folgenden Schritt umfasst:

zuführen des ersten Elektrolyten aus der ersten Druckleitung (105b) zu dem ersten Einlass; und
zuführen einer Mischung aus dem ersten Elektrolyten und dem zweiten Elektrolyten aus der zweiten Druckleitung (106b) zu dem zweiten Einlass.

**14.** Verfahren nach einem der Ansprüche 11 bis 13, wobei das erste Gas ein Wasserstoffgas ist, die erste Kammer eine Kathodenkammer ist, der erste Separator (103) ein Wasserstoffseparator ist und der erste Elektrolyt ein Katholyt ist; und wobei das zweite Gas ein Sauerstoffgas ist, die zweite Kammer eine Anodenkammer ist, der zweite Separator (104) ein Sauerstoffseparator ist und der zweite Elektrolyt ein Anolyt ist.

**15.** Verfahren nach einem der Ansprüche 11 bis 13, wobei das erste Gas das Sauerstoffgas ist, die erste Kammer die Anodenkammer ist, der erste Separator (103) der Sauerstoffseparator ist und der erste Elektrolyt der Anolyt ist; und wobei das zweite Gas Wasserstoffgas ist, die zweite Kammer die Kathodenkammer ist, der zweite Separator (104) der Wasserstoffseparator ist und der zweite Elektrolyt der Katholyt ist.

**16.** Verfahren nach einem der Ansprüche 11 bis 15, wobei das Verfahren den Schritt des Berechnens der vorbestimmten Mischrate des Katholyten oder des Anolyten in der Verbindungsleitung (111) umfasst, um die Konzentration des dem Stack (101) zugeführten Katholyten höher als die Konzentration des dem Stack (101) zugeführten Anolyten zu erhöhen.

**17.** Verfahren nach Anspruch 16, wobei das Verfahren die folgenden Schritte umfasst:

Steuern der vorbestimmten Mischrate des Katholyten oder des Anolyten in der Verbindungsleitung (111) derart, dass die Differenz zwischen der Konzentration des dem Stack (101) zugeführten Katholyten und der Konzentration des dem Stack (101) zugeführten Anolyten zwischen 1 Gew.-% und 6 Gew.-%, vorzugsweise etwa 5 Gew.-%, beträgt; und
Steuern der vorbestimmten Mischrate des Katholyten oder des Anolyten in der Verbindungsleitung (111) derart, dass die Konzentration des Katholyten und des Anolyten zwischen 20 Gew.-% und 40 Gew.-%, vorzugsweise zwischen 26 Gew.-% und 36 Gew.-%, liegt.

**18.** Verfahren nach Anspruch 16 oder 17, wobei das Verfahren die folgenden Schritte umfasst: Verringern der Löslichkeit des Wasserstoffgases und des Sauerstoffgases im Katholyten durch Verwendung einer vorbestimmten Mischrate in der Verbindungsleitung (111) zum Mischen des Katholyten aus der ersten Druckleitung (105b) mit dem Anolyten in der zweiten Ansaugleitung (106a) oder umgekehrt.

**19.** Verfahren nach einem der Ansprüche 11 bis 18, das ferner den Schritt umfasst, die vorbestimmte Mischrate in der Verbindungsleitung (111) auf null zu setzen, wenn der Stack (101) unterhalb eines minimalen Stack-Stroms arbeitet.

**Revendications**

**1.** Système d'électrolyseur (100) comprenant:

au moins une pile d'électrolyseurs (101) produisant un premier mélange gaz-premier électrolyte dans un premier compartiment de la pile (101) et un deuxième mélange gaz-deuxième électrolyte dans un deuxième compartiment de la pile (101);
un premier séparateur (103) recevant le premier mélange gaz-premier électrolyte via une première sortie (107) et séparant un premier électrolyte d'un premier gaz;
un deuxième séparateur (104) recevant le deuxième mélange gaz-deuxième électrolyte via une deuxième sortie (108) et séparant un deuxième électrolyte d'un deuxième gaz;
une première entrée (105c) pour transporter au moins le premier électrolyte dans la pile (101) et une deuxième entrée (106c) pour transporter au moins le deuxième électrolyte dans la pile (101);
une première conduite d'aspiration (105a) reliant une première pompe (109) et le premier séparateur (103);
une première conduite de tête (105b) reliant la première pompe (109) et la première entrée (105c) de la pile (101);

une deuxième conduite d'aspiration (106a) reliant une deuxième pompe (110) et le deuxième séparateur (104);

une deuxième conduite de tête (106b) reliant la deuxième pompe (110) et la deuxième entrée (106c) de la pile (101); et

une conduite d'interconnexion (111) reliant la première conduite de tête (105b) et la deuxième conduite d'aspiration (106a);

dans lequel la conduite d'interconnexion (111) comprend en outre:

un capteur de débit (113) mesurant le taux de mélange prédéterminé du premier électrolyte;

une vanne de débit (112) régulant le débit de mélange prédéterminé du premier électrolyte; et

un contrôleur de débit (114) communiquant numériquement avec le capteur de débit (113), la vanne de débit (112) et un capteur de courant (116) mesurant le courant électrique appliqué à la pile (101);

dans lequel la conduite d'interconnexion (111) est configurée pour fournir une partie du premier électrolyte, à un débit de mélange prédéterminé, de la première conduite de tête (105b) à la deuxième conduite d'aspiration (106a);

dans lequel le contrôleur de débit (114) est configuré pour réguler la vanne de débit (112) sur la base d'une pluralité d'entrées provenant du capteur de débit (113) et du capteur de courant (116) afin de contrôler le débit de mélange prédéterminé du premier électrolyte via la conduite d'interconnexion (111); et

dans lequel le débit de mélange prédéterminé est directement proportionnel à un courant électrique appliqué à la pile (101).

2. Système d'électrolyseur selon l'une quelconque des revendications précédentes, le système comprenant en outre une conduite d'égalisation (115) reliant le premier séparateur (103) au deuxième séparateur, une partie du deuxième électrolyte provenant du deuxième séparateur (104) s'écoulant vers le premier séparateur (103) via la conduite d'égalisation (115) afin d'équilibrer un premier niveau d'électrolyte et un deuxième niveau d'électrolyte.

3. Système d'électrolyseur selon l'une quelconque des revendications précédentes, dans lequel la première entrée (105c) reçoit le premier électrolyte provenant de la première conduite de tête (105b) et la deuxième entrée (106c) reçoit de mélange du premier électrolyte et du deuxième électrolyte provenant de la deuxième conduite de tête (106b).

4. Système d'électrolyseur selon l'une quelconque des revendications précédentes, dans lequel une pluralité de piles (101), comprenant deux ou plusieurs piles (101), sont connectées au premier séparateur (103) et au deuxième séparateur (104) et les piles (101) sont configurées pour fonctionner collectivement sur un courant de pile équivalent.

5. Système d'électrolyseur selon l'une quelconque des revendications précédentes, dans lequel le premier gaz est un gaz hydrogène, le premier compartiment est un compartiment cathodique, le premier séparateur (103) est un séparateur d'hydrogène et le premier électrolyte est un catholyte; et dans lequel le deuxième gaz est un gaz oxygène, le deuxième compartiment est un compartiment anodique, le deuxième séparateur (104) est un séparateur d'oxygène et le deuxième électrolyte est un anolyte.

6. Système d'électrolyseur selon l'une quelconque des revendications 1 à 4, dans lequel le premier gaz est le gaz oxygène, le premier compartiment est le compartiment anodique, le premier séparateur (103) est le séparateur d'oxygène et le premier électrolyte est l'anolyte; et dans lequel le deuxième gaz est le gaz hydrogène, le deuxième compartiment est le compartiment cathodique, le deuxième séparateur (104) est le séparateur d'hydrogène et le deuxième électrolyte est le catholyte.

7. Système d'électrolyseur selon l'une quelconque des revendications précédentes, dans lequel le contrôleur de débit (114) est configuré pour calculer le taux de mélange prédéterminé du catholyte ou de l'anolyte dans la conduite d'interconnexion (111), afin d'augmenter par conséquent la concentration du catholyte fourni à la pile (101) pour qu'elle soit supérieure à la concentration de l'anolyte fourni à la pile (101).

8. Système d'électrolyseur selon la revendication 7, dans lequel une différence entre la concentration du catholyte fourni à la pile (101) et la concentration de l'anolyte fourni à la pile (101) est comprise entre 1 % en poids et 6 % en poids, de préférence autour de 5 % en poids; la concentration du catholyte et la concentration de l'anolyte étant comprises entre 20 % en poids et 40 % en poids, de préférence entre 26 % en poids et 36 % en poids.

9. Système d'électrolyseur selon la revendication 7 ou 8, dans lequel une solubilité du gaz hydrogène et du gaz oxygène dans le catholyte diminue en utilisant le taux de mélange prédéterminé dans la conduite d'interconnexion (111) pour mélanger le catholyte provenant de la première conduite de tête (105b) avec l'anolyte dans la deuxième conduite d'aspiration (106a), ou vice versa.

10. Système d'électrolyseur selon l'une quelconque des revendications précédentes, dans lequel le système est pressurisé à au moins 500 kPa, et de préférence entre 2000 et 4000 kPa.

11. Procédé d'électrolyse de l'eau utilisant au moins une pile d'électrolyseurs (101) pour produire un premier gaz et un deuxième gaz, le procédé comprenant:

appliquer un courant électrique à la pile (101) tout en fournissant un premier électrolyte et un deuxième électrolyte à un premier compartiment et à un deuxième compartiment de la pile (101) pour produire un premier mélange gaz-premier électrolyte dans un premier compartiment de la pile (101) et un deuxième mélange gaz-deuxième électrolyte dans un deuxième compartiment de la pile (101);
transporter le premier mélange gaz-premier électrolyte vers un premier séparateur (103) via une première sortie (107);
transporter le deuxième mélange gaz-deuxième électrolyte vers un deuxième séparateur (104) via une deuxième sortie (108);
séparer le premier électrolyte d'un premier gaz au niveau du premier séparateur (103);
séparer le deuxième électrolyte d'un deuxième gaz au niveau du deuxième séparateur (104);
transporter le premier électrolyte du premier séparateur (103) à une première pompe (109) via une première conduite d'aspiration;
transporter un deuxième électrolyte du deuxième séparateur (104) à une deuxième pompe (110) via une deuxième conduite d'aspiration (106a);
transporter au moins le premier électrolyte de la première pompe (109) à une première entrée (105c) de la pile (101) via une première conduite de tête (105b);
transporter au moins le deuxième électrolyte de la deuxième pompe (110) à une deuxième entrée (106c) de la pile (101) via une deuxième conduite de tête (106b);
fournir une partie du premier électrolyte, à un taux de mélange prédéterminé, de la première conduite de tête (105b) à la deuxième conduite d'aspiration (106a) via une conduite d'interconnexion (111);
mesurer le taux de mélange prédéterminé à l'aide d'un débitmètre connecté dans la conduite d'interconnexion (111);
mesurer le courant électrique appliqué à la pile (101) à l'aide d'un capteur de courant (116); et
configurer un contrôleur de débit (114) pour contrôler une vanne de débit (112) dans la conduite d'interconnexion (111) sur la base d'une pluralité d'entrées provenant du débitmètre et du capteur de courant (116);
dans lequel le taux de mélange prédéterminé du premier électrolyte est directement proportionnel au courant électrique appliqué à la pile (101).

12. Procédé selon l'une quelconque des revendications 11, comprenant en outre l'étape de transporter une partie du deuxième électrolyte du deuxième séparateur (104) au premier séparateur (103) via une conduite d'égalisation (115) afin d'équilibrer les niveaux d'électrolyte.

13. Procédé selon l'une quelconque des revendications 11 ou 12, comprenant en outre l'étape consistant à:

fournir le premier électrolyte de la première conduite de tête (105b) à la première entrée; et
fournir le mélange du premier électrolyte et du deuxième électrolyte de la deuxième conduite de tête (106b) à la deuxième entrée.

14. Procédé selon l'une quelconque des revendications 11 à 13, dans lequel le premier gaz est un gaz hydrogène, le premier compartiment est un compartiment cathodique, le premier séparateur (103) est un séparateur d'hydrogène et le premier électrolyte est un catholyte; et dans lequel le deuxième gaz est un gaz oxygène, le deuxième compartiment est un compartiment anodique, le deuxième séparateur (104) est un séparateur d'oxygène et le deuxième électrolyte est un anolyte.

15. Procédé selon l'une quelconque des revendications 11 à 13, dans lequel le premier gaz est le gaz oxygène, le premier compartiment est le compartiment anodique, le premier séparateur (103) est le séparateur d'oxygène et le premier électrolyte est l'anolyte; et dans lequel le deuxième gaz est le gaz hydrogène, le deuxième compartiment est le compartiment cathodique, le deuxième séparateur (104) est le séparateur d'hydrogène et le deuxième électrolyte est le catholyte.

**16.** Procédé selon l'une quelconque des revendications 11 à 15, le procédé comprenant l'étape de calcul du taux de mélange prédéterminé du catholyte ou de l'anolyte dans la conduite d'interconnexion (111), afin d'augmenter par conséquent la concentration du catholyte fourni à la pile (101) pour qu'elle soit supérieure à la concentration de l'anolyte fourni à la pile (101).

**17.** Procédé selon la revendication 16, dans lequel le procédé comprend les étapes suivantes:

contrôler le taux de mélange prédéterminé du catholyte ou de l'anolyte dans la ligne d'interconnexion (111) de telle sorte que la différence entre la concentration du catholyte fourni à la pile (101) et la concentration de l'anolyte fourni à la pile (101) soit comprise entre 1 % en poids et 6 % en poids, de préférence autour de 5 % en poids; et contrôler le taux de mélange prédéterminé du catholyte ou de l'anolyte dans la ligne d'interconnexion (111) de telle sorte que la concentration du catholyte et de l'anolyte soit comprise entre 20 % et 40 % en poids, de préférence entre 26 % et 36 % en poids.

**18.** Procédé selon la revendication 16 ou 17, dans lequel le procédé comprend les étapes suivantes: réduire la solubilité du gaz hydrogène et du gaz oxygène dans le catholyte en utilisant un débit de mélange prédéterminé dans la conduite d'interconnexion (111) pour mélanger le catholyte provenant de la première conduite de tête (105b) avec l'anolyte dans la deuxième conduite d'aspiration (106a), ou vice versa.

**19.** Procédé selon l'une quelconque des revendications 11 à 18, le procédé comprenant en outre l'étape de régler le taux de mélange prédéterminé dans la conduite d'interconnexion (111) à zéro lorsque la pile (101) fonctionne en dessous d'un courant minimal.

FIG. 1

FIG. 2

FIG. 3

FIG. 4

FIG. 5

FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3770304 A1
- US 2022333260 A
- US 2021262101 A
- US 2022325423 A

**Non-patent literature cited in the description**

- **GILLIAM et al.** *International Journal of Hydrogen Energy*, 11 December 2006 (32), 359-364
- **JÖRN BRAUNS et al.** *Electrochimica Acta*, 01 February 2022, vol. 404, 139685, https://doi.org/10.1016/j.electacta.2021.139715
- **HIMMELBLAU et al.** Solubilities of Inert Gases in Water. 0° C. to Near the Critical Point of Water. *Journal of Chemical and Engineering Data*, 1960, vol. 5 (1), 10-15